# EUROPEAN PATENT APPLICATION

(11) **EP 1 450 466 A1**
(43) Date of publication of application: **25.08.2004**
(21) Application number: 03003820.2
(22) Date of filing: 20.02.2003
(51) Int. Cl.: H02K 5/22

(54) **High temperature power cable for an electric machine**

(71) Applicant: Rexroth Indramat GmbH, 97816 Lohr am Main (DE)
(72) Inventor: Groening, Ingolf, 97816 Lohr am Main (DE)

(57) **Abstract**

Insulated multi-core electric power cable for use with an electric motor or equivalent power consumer comprising an electrically insulating outer layer with a specified maximum operating temperature rating, and one or more inner conductors each conductor or group of conductors being insulated with insulation material also specified with a maximum operating temperature rating, whereby the temperature rating of the cable outer insulation layer is lower than that of the inner conductor insulation.

## Description

### BACKGROUND OF THE INVENTION

### 1. Field of the invention

The present invention is directed to a cable for the transmission of electrical power to an electrical machine.

### 2. Description of the Related Art

Electrical machines are generally constructed from a motive part and a stationary part one or both of which is provided with wound coils which carry current and generate a magnetic field. These coils are mounted on a magnetic iron core and supported by a motor housing or body which is itself mounted in some manner to a mechanical load. The coils have a certain minimum electrical resistance and thus the current flowing in the coils generates heat. The heat flow from interior to the exterior creates a temperature gradient across the machine with the coils being significantly hotter than the housing. The temperature of the outer surface of the motor is limited to an absolute maximum for safety reasons, normally 100° C, while the internal temperature is limited by the maximum allowable component temperatures, for example wire insulation, bearings, magnetic material. In general the maximum internal temperature is limited to 150° C. Further to this there are regulations governing the electrical insulation of the cables used to carry current into and out of the windings and the methods and location of the connection of those cables.

Components with high temperature-ratings tend to be more expensive than components with a lower temperature rating, and in the case of cables, tend also to be very stiff and have a very limited bending radius the outer insulating layer or sheath: The system designer will thus try wherever possible to use the cheaper components, including the power cable used to supply the motor. Clearly, the motor windings must be connected to an external electrical power source via an electrical cable, and in order to keep the cost of the cable down it is preferable to use cable with the minimum possible temperature rating compatible with the application. It is expressly forbidden in the UL standard for electrical equipment to connect a cable at a point at which the temperature exceeds the rating of the cable or its insulation. As the external power cable is not rated to withstand the internal temperature of the motor, it must be connected external to the motor which necessitates the use of short pieces of wire with high temperature rating insulation to connect the ends of the power cable to the motor windings. These wires run from the stator of the motor out through the housing of the machine to a point at which they can be terminated in a connector box. The low temperature-rating power cable can then be connected to the windings via the short interface wires in the connector box external to the motor housing. Thus it is possible to utilise relatively low temperature rated cable to supply electrical power to the windings of an electric machine.

This method becomes problematic in motors of a small physical size where the size of the connector box becomes prohibitive, or in applications where the physical space necessary for an externally mounted connection box is not available. These problems can not simply be solved by using a high temperature cable because of the significantly reduced flexibility of this type of cable, which makes it very impractical. due to the material characteristics of

### SUMMARY OF THE INVENTION

It is the object of the invention to provide a means of allowing direct connection of the power cable to the windings of an electrical machine, thus eliminating the connector box.

The object is met by a motor cable in which the temperature-rating of the inner conductor insulation is higher than that of the external insulation.

The UL standard allows such a cable with an outer sheath with a temperature-rating selected for the maximum expected temperature on the housing of the motor, to be physically attached to the motor via a standard connector, the connector itself being normally fixed into the motor housing. The insulation forming the cable's external sheath is held firmly inside the connector housing by a compressible grommet, it does not ingress into the motor and can thus be rated to the same temperature as the housing itself, generally to class B or 100°C. The inner wall of the connector socket does lie within the body of the motor but this is acceptable within the defines of the UL standard.

The cable may thus be terminated such that the lower temperature rating exterior sheath remains external or practically external to the motor housing, thus complying with the UL regulations. The insulated interior conductors with high temperature-rating insulation material continue through the socket into the motor housing itself, and are terminated close to the motor windings by direct connection to the ends of the windings; usually by soldering or welding. The motor cable which is the subject of this invention thus removes the requirement for an external connector boy and high temperature-rating interface wires.

This makes the electrical machine easier and cheaper to manufacture as there is now no necessity to connect short pieces of high temperature insulated wires between the ends of the windings and a connector box.

The flexibility of a power cable for a given cable diameter is dictated by the characteristics of both the external insulation material and the internal conductors, the external insulation material being the dominant factor in most types of cable. High temperature-rating material tends to have characteristics which make it less flexible, thus a cable with a low temperature-rating external sheath ensures that the cable has the necessary bending radius, while the high temperature-rating inner conductor insulation, while not significantly restricting the cable flexibility, allows the direct connection of the inner conductors to the windings of the motor. It can also be advantageous to have interior conductors with insulation with various temperature ratings for connection at various points within the machine, these conductors can then be optimised for connecting to temperature sensors, a position encoder or resolver or an electric brake, all of which may be located at points in the machine with differing maximum temperature requirements.

### BRIEF DESCRIPTION OF THE DRAWINGS

Further features and advantages of the invention are indicated in the following description of an embodiment example with reference to the drawing, wherein:

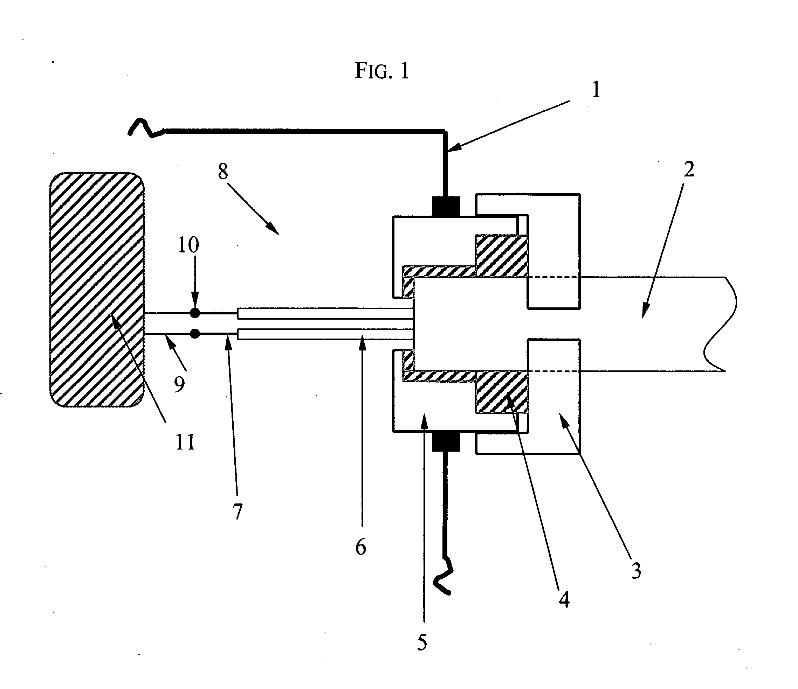

Fig. 1 is a sectional view of a 2 conductor motor cable according to an embodiment of the present invention.

### DETAILED DESCRIPTION OF THE PRESENTLY PREFERRED EMBODIMENTS

Fig 1 shows schematically a side elevation of a cylindrical rotating machine sectioned along its axis and a multi-core motor cable 2, of which for clarity only two internal conductors 7 are shown, the conductors having an insulation layer 6 the whole cable 2 being terminated in a connector assembly 3,4,5. The complete assembly is fixed to the housing 1 of a motor (not shown). The figure shows the conductors 7 with insulation removed from their ends, the conductors 7 being directly connected to two ends 9 of a winding 11 of the motor by a weld or solder joint 10.

The power cable 2 is held securely in place by the radial pressure exerted by a grommet 4 compressed by the outer housing of the connector 3 against the connector housing part 5 which is normally a screw type housing. The temperature inside the motor housing 8 is greatest in the vicinity of the winding 11 where it reaches around 150°C requiring class F insulation, decreasing to a maximum of around 100°C at the surface of the housing 1 where only a class B rating is required.

Thus while we have shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the spirit of the invention. For example, it is expressly intended that all combinations of those elements which perform substantially the same function is substantially the same way to achieve the same results are within the scope of the invention. Moreover, it should be recognised that structured and/or elements shown and/or described in connection with any disclosed form or embodiment of the invention may be incorporated in any other disclosed or described or suggested form or embodiment as a general matter of design choice. It is the intention, therefore, to be limited only as indicated by the scope of the claims hereto.

## Claims

1. What is claimed is an insulated multi-core electric power cable for use with an electric motor or equivalent power consumer comprising an electrically insulating outer layer with a specified maximum operating temperature rating, and one or more inner conductors each conductor or group of conductors being insulated with insulation material also specified with a maximum operating temperature rating, whereby the temperature rating of the cable outer insulation layer is lower than that of the inner conductor insulation.

2. The power cable of claim 1 whereby the outer insulation has a class 'B' temperature rating and the inner insulation has a class 'F' rating or greater.

3. The power cable of claim 1 whereby the cable connector is mounted directly in the motor housing.

4. The power cable of claim 1 whereby the multiple inner conductors have insulation with temperature-ratings which differ from each other.
